# EUROPEAN PATENT APPLICATION

(11) **EP 4 825 638 A1**
(43) Date of publication of application: **21.10.2026**
(21) Application number: 25876387.9
(22) Date of filing: 13.08.2025
(51) Int. Cl.: B60L 3/12, B60L 58/12

(54) **METHOD AND APPARATUS FOR DETERMINING RANGE OF VEHICLE, DEVICE AND STORAGE MEDIUM**

(30) Priority: 11.10.2024 CN 202411417146
(71) Applicant: Chery Automobile Co., Ltd., Wuhu, Anhui 241006 (CN)
(72) Inventor: WANG, Dingwen, Wuhu, Anhui 241006 (CN); CAO, Xinyun, Wuhu, Anhui 241006 (CN); LEI, Zhi, Wuhu, Anhui 241006 (CN); LI, Shuo, Wuhu, Anhui 241006 (CN); LONG, Jinshi, Wuhu, Anhui 241006 (CN); CHEN, Wenmin, Wuhu, Anhui 241006 (CN)
(74) Representative: Adamson Jones
(86) International application number: PCT/CN2025/114321
(87) International publication number: WO 2026/077101

(57) **Abstract**

A method and apparatus for determining the range of a vehicle (101), a device, and a storage medium. The method comprises: acquiring real-time vehicle information and historical travel data of a vehicle (101), the real-time vehicle information comprising a first vehicle parameter, the first vehicle parameter comprising a first battery state of charge and a current vehicle range, the historical travel data comprising a second vehicle parameter, and the second vehicle parameter comprising a second battery state of charge and a first historical range; using a reference similarity between the first vehicle parameter and the second vehicle parameter to determine selected historical travel data; determining, on the basis of the reference similarity, a weight corresponding to the selected historical travel data, and using the weight and the first historical range to determine a second historical range corresponding to the second battery state of charge; and determining a correction parameter of the second historical range, and using the correction parameter, the second historical range, and the current vehicle range to determine a target vehicle range.

## Description

The present disclosure is based upon and claims priority to Chinese Patent Application No. 202411417146.6, filed on October 11, 2024, and entitled "VEHICLE ENDURANCE MILEAGE DETERMINATION METHOD AND DEVICE, EQUIPMENT AND STORAGE MEDIUM," the entire contents of which are incorporated herein by reference.

### TECHNICAL FIELD

The embodiments of the present disclosure relate to the field of vehicles, and particularly to a method and apparatus for determining an available range of a vehicle, and a device and storage medium thereof.

### BACKGROUND

With the increasing emphasis on environmental protection and sustainable development, the number of new energy vehicles is gradually increasing.

In related technologies, the battery state of charge (SOC) of new energy vehicles is used to determine the available range, which refers to the distance that the vehicle can still travel. The factors determining the available range are single, resulting in poor accuracy of the determined available range. This inconveniences users in planning their travel based on the available range.

### SUMMARY

The present disclosure provides a method for determining an available range of a vehicle, aimed at improving the accuracy of the determined available range. The technical solutions are as follows.

In one aspect, the present disclosure provides a method for determining an available range of a vehicle. The method is applicable to a vehicle control system and includes: obtaining real-time vehicle information and historical trip data of the vehicle, wherein the real-time vehicle information includes a first vehicle parameter corresponding to a traveling state of the vehicle at a current moment, the first vehicle parameter including a first battery SOC and a current available range of the vehicle corresponding to the first battery SOC, and the historical trip data includes a second vehicle parameter corresponding to a traveling state of the vehicle at a historical moment, the second vehicle parameter including a second battery SOC and a first historical available range corresponding to the second battery SOC; determining selected historical trip data from the historical trip data based on a reference similarity between the first vehicle parameter and the second vehicle parameter, wherein a historical duration of the selected historical trip data is less than or equal to a threshold duration, and the historical duration is from the historical moment to the current moment; determining a weight corresponding to the selected historical trip data based on the reference similarity, and determining a second historical available range corresponding to the second battery SOC based on the weight and a first historical available range in the selected historical trip data; and determining a correction parameter corresponding to the second historical available range, and determining a target available range of the vehicle corresponding to the first battery SOC based on the correction parameter, the second historical available range, and the current available range of the vehicle.

In another aspect, embodiments of the present disclosure provide an apparatus for determining an available range of a vehicle. The apparatus includes: an obtaining module, configured to obtain real-time vehicle information and historical trip data of the vehicle, wherein the real-time vehicle information includes a first vehicle parameter corresponding to a traveling state of the vehicle at a current moment, the first vehicle parameter including a first battery SOC and a current available range of the vehicle corresponding to the first battery SOC, and the historical trip data includes a second vehicle parameter corresponding to a traveling state of the vehicle at a historical moment, the second vehicle parameter including a second battery SOC and a first historical available range corresponding to the second battery SOC; a determining module, configured to determine selected historical trip data from the historical trip data based on a reference similarity between the first vehicle parameter and the second vehicle parameter, wherein a historical duration of the selected historical trip data is less than or equal to a threshold duration, and the historical duration is from the historical moment to the current moment; the determining module, further configured to determine a weight corresponding to the selected historical trip data based on the reference similarity, and determine a second historical available range corresponding to the second battery SOC based on the weight and a first historical available range in the selected historical trip data; and a correction module, configured determine a correction parameter corresponding to the second historical available range, and determine a target available range of the vehicle corresponding to the first battery SOC based on the correction parameter, the second historical available range, and the current available range of the vehicle.

In another aspect, embodiments of the present disclosure provide a computer device. The computer device includes a processor and a memory storing at least one program code therein, wherein the at least one program code, when loaded and executed by the processor, causes the computer device to perform any of the above-mentioned methods for determining the available range of the vehicle.

In another aspect, a computer-readable storage medium is also provided. At least one program code is stored in the computer-readable storage medium. The at least one program code, when loaded and executed by a processor, causes a computer to perform any of the aforementioned methods for determining the available range of the vehicle.

In another aspect, a computer program or computer program product is also provided. At least one computer instruction is stored in the computer program or computer program product. The at least one computer instruction, when loaded and executed by a processor, causes a computer to perform any of the above methods for determining the available range of the vehicle.

The technical solutions according to the present disclosure at least achieve the following beneficial effects.

In the technical solutions according to the present disclosure, the selected historical trip data is determined based on the reference similarity between the first vehicle parameter in the real-time vehicle information and the second vehicle parameter in the historical trip data and the historical duration. The selected historical trip data is similar to the first vehicle parameter of the current vehicle, which can improve the accuracy of determining the available range of the vehicle based on the selected historical trip data in subsequent processes. Furthermore, processing the selected historical trip data in subsequent processes can enhance data processing efficiency compared to processing all historical trip data. The weight corresponding to the selected historical trip data is determined based on the reference similarity, the second historical available range is determined based on the weight and the first historical available range, the second historical available range is corrected based on the correction parameter, and the vehicle target available range is determined based on the corrected second historical available range and the current available range of the vehicle, such that the accuracy of the determined target available range of the vehicle can be improved.

### BRIEF DESCRIPTION OF DRAWINGS

For clearer descriptions of the technical solutions in the embodiments of the present disclosure, the following briefly describes the accompanying drawings required for describing the embodiments. Apparently, the accompanying drawings in the following description illustrate merely some embodiments of the present disclosure, and those of ordinary skill in the art can still derive other drawings from these accompanying drawings without creative efforts.
FIG. 1 is a schematic diagram of an implementation environment according to some embodiments of the present disclosure;
FIG. 2 is a flowchart of a method for determining an available range of a vehicle according to some embodiments of the present disclosure;
FIG. 3 is a schematic diagram of a vehicle available range curve according to some embodiments of the present disclosure;
FIG. 4 is a schematic structural diagram of an apparatus for determining an available range of a vehicle according to some embodiments of the present disclosure;
FIG. 5 is a structural block diagram of a terminal device according to some embodiments of the present disclosure; and
FIG. 6 is a schematic structural diagram of a server according to some embodiments of the present disclosure.

### DETAILED DESCRIPTION

For clearer descriptions of the objectives, technical solutions, and advantages of the present disclosure, embodiments of the present disclosure are further described in detail hereinafter with reference to the accompanying drawings.

It should be noted that the terms "first," "second," and the like in the present disclosure are used to distinguish similar objects, and are not necessarily used to describe a specific order or sequence. It should be understood that such terms can be interchanged where appropriate, so that the embodiments of the present disclosure described herein can be implemented in an order other than those illustrated or described herein. The implementations described in the following exemplary embodiments do not represent all implementations consistent with the present disclosure. Instead, they are merely examples of apparatuses and methods consistent with some aspects of the present disclosure as detailed in the appended claims.

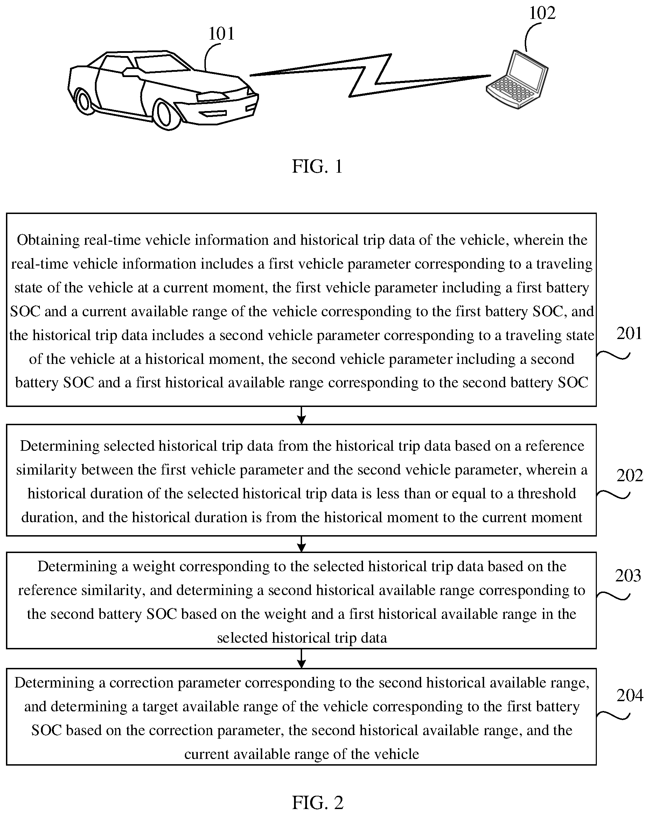

FIG. 1 is a schematic diagram of an implementation environment according to some embodiments of the present disclosure. As shown in FIG. 1, the implementation environment may include a vehicle 101 and a vehicle control system 102. The vehicle control system 102 is used to control the vehicle 101 to perform corresponding operations. The vehicle control system 102 may be located in the vehicle 101, for example, the vehicle control system 102 is a vehicle user equipment; alternatively, the vehicle control system 102 may be located outside the vehicle 101, for example, the vehicle control system 102 is a cloud control system.

The vehicle control system 102 may be a standalone server, or may be a server cluster consisting of a plurality of servers that implement different functions, or may be a cloud computing center.

The vehicle 101 may be a vehicle equipped with an intelligent assisted driving function, and may have hardware facilities such as cameras, millimeter-wave radar, lidar, positioning sensors, and communication sensors. The vehicle 101 obtains real-time vehicle information and historical vehicle information through the configured hardware facilities. The vehicle control system 102 may determine the available range of the vehicle under the current battery SOC based on the real-time vehicle information and historical vehicle information of the vehicle 101.

The vehicle 101 may also be equipped with a wireless communication function. The vehicle 101 may be equipped with a communication module supporting either wireless communication technology or wired communication technology, and the vehicle 101 enables data interaction with the vehicle control system 102 through the communication module.

Based on the implementation environment shown in FIG. 1 above, embodiments of the present disclosure provide a method for determining an available range of a vehicle. As shown in FIG. 2, the method may be performed by the vehicle 101 in FIG. 1, or may be performed through interaction between the vehicle 101 and the vehicle control system 102. The method may include steps 201 to 204.

In step 201, real-time vehicle information and historical trip data of the vehicle are obtained, wherein the real-time vehicle information includes a first vehicle parameter corresponding to a traveling state of the vehicle at a current moment, and the first vehicle parameter includes a first battery SOC and a current available range of the vehicle corresponding to the first battery SOC; and the historical trip data includes a second vehicle parameter corresponding to a traveling state of the vehicle at a historical moment, and the second vehicle parameter includes a second battery SOC and a first historical available range corresponding to the second battery SOC.

In the exemplary embodiments of the present disclosure, the vehicle may be a new energy vehicle equipped with the on-board intelligent system. The new energy vehicle may be driven by one or more driving modes, at least including electric energy driving. For example, the new energy vehicle may include, but is not limited to, a battery electric vehicle (BEV), a hybrid electric vehicle (HEV), a plug-in hybrid electric vehicle (PHEV), a range-extended electric vehicle (REEV), and a fuel cell electric vehicle (FCEV).

The on-board intelligent system is equipped with an information obtaining device, which may obtain real-time vehicle information and store the obtained real-time vehicle information to obtain historical trip data. The real-time vehicle information may include the first vehicle parameter corresponding to the current traveling state of the vehicle and the first environmental information. The vehicle may be equipped with the information obtaining device, which may include but is not limited to cameras, millimeter-wave radars, laser radars, and a plurality of sensors. The sensors may include inertial sensors, speed sensors, acceleration sensors, engine speed sensors, and temperature sensors.

The information obtaining device in the vehicle obtains, in real time, the first vehicle parameter of the vehicle and the first environmental information corresponding to the environment in which the vehicle is located. The first vehicle parameter may include, but is not limited to, the speed parameter, acceleration parameter, position parameter, engine speed parameter, torque parameter, temperature parameter, parameter of on-board electrical devices, driving mode parameter, energy recovery parameter, vehicle load parameter, and tire pressure parameter of the vehicle at the current moment; the first environmental information includes, but is not limited to, the temperature parameter, humidity parameter, obstacles, and illumination parameters of the external environment in which the vehicle is located at the current moment. The historical trip data includes second vehicle parameter corresponding to the traveling state of the vehicle at the historical moment and the second environmental information. The second vehicle parameter is similar to the first vehicle parameter, and the second environmental information is similar to the first environmental information, which will not be further elaborated here. It should be noted that the present disclosure provides exemplary descriptions of the real-time vehicle information and the historical trip data, and the obtained information may be set based on the actual situation of the vehicle. The present disclosure does not impose any limitations in this regard.

In step 202, selected historical trip data is determined from the historical trip data based on a reference similarity between the first vehicle parameter and the second vehicle parameter, wherein the historical duration of the selected historical trip data is less than or equal to a threshold duration, and the historical duration is from the historical moment to the current moment.

In the exemplary embodiments of the present disclosure, the historical moment when the historical trip data is generated is determined, and historical trip data with a historical duration less than or equal to a threshold duration is obtained by performing a first screening on the historical trip data based on the historical duration from the historical moment to the current moment. The threshold duration is determined based on at least one of the following: a preset duration, a change in a battery performance of the vehicle, or a usage environment of the vehicle. The change in the battery performance of the vehicle includes, but is not limited to, a number of battery charge and discharge cycles or the a battery state of health (SOH).

For example, the threshold duration is a preset duration, which may be set to 3 months or 6 months.

Another example is that the threshold duration is dynamically adjusted based on the number of battery charge and discharge cycles and the SOH. If the number of battery charge and discharge cycles is not greater than 300 and the SOH is not less than90% (indicating that the battery is in a stable performance period), the threshold duration is set to 6 months; if the number of charge and discharge cycles is greater than 800 or the SOH is less than 70% (indicating that the battery is in a performance decline period), the threshold duration is set to 1 month.

Another example is that the threshold duration is set based on the environmental characteristics in which the vehicle is primarily used over a long period of time. If the vehicle is primarily used in a dry environment at room temperature (-10°C~35°C), the threshold duration is set to 6 months; if the vehicle is exposed to high temperatures (>40°C) or high humidity (>80%) over a long period of time (accelerating battery aging), the threshold duration is set to 2 months.

It should be noted that the method for determining the threshold duration in the present disclosure is provided as an illustrative example and may be adjusted based on actual circumstances. The present disclosure does not impose any restrictions in this regard.

By correlating the threshold duration with a plurality of dimensional factors such as the preset duration, change in battery performance, and usage environment, dynamic screening of historical trip data is achieved. The preset duration ensures basic applicability; the change in the battery performance may adapt to the accuracy requirements of different aging stages; and the usage environment takes into account the impact of extreme usage environment on historical trip data. The combination of these three factors not only avoids ineffective calculations of redundant data but also ensures a high correlation between the screened historical data and the current vehicle state, providing a more reliable data foundation for subsequently determining the available range of the vehicle and further enhancing the accuracy and scenario adaptability of the target available range.

By performing the first screening on the historical trip data based on the threshold duration and the historical duration, recent trip data of the vehicle may be obtained. The recent data of the vehicle may more accurately reflect the current state and performance of the vehicle. Especially, the battery performance changes less in a short period of time. When the available range of the vehicle is calculated based on the screened historical trip data in the subsequent process, the accuracy of the determined available range of the vehicle can be improved. Furthermore, by performing the first screening on the historical trip data, the amount of calculation for subsequent similarity calculations based on historical trip data can be reduced, improving data processing efficiency.

Illustratively, after the first screening is performed on the historical trip data, a second screening may be performed to obtain selected historical trip data. The second screening may be performed on the historical trip data based on the reference similarity. The reference similarity may include a third similarity. The process of screening the historical trip data based on reference similarity to obtain the selected historical trip data includes: determining the third similarity between the first vehicle parameter and the second vehicle parameter, and determining the second vehicle parameter with the third similarity greater than or equal to a second similarity threshold as the reference vehicle parameter; and determining the historical trip data corresponding to the reference vehicle parameter as the selected historical trip data. Specifically, determining the third similarity between the first vehicle parameter and the second vehicle parameter involves determining the third similarity between the first vehicle parameter and the second vehicle parameter from the historical trip data with the historical duration less than or equal to a threshold duration.

Optionally, before the third similarity between the first vehicle parameter and the second vehicle parameter is determined, preprocessing may be performed on the first and second vehicle parameters to remove abnormal values or missing values, and normalization may be performed on the first and second vehicle parameters to enable comparison between the first and second vehicle parameters on the same scale.

The first vehicle parameter and the second vehicle parameter may include a plurality of parameters. The first feature vector and the second feature vector are constructed using the types of parameters in the first vehicle parameter and the second vehicle parameter. The first feature vector and the second feature vector may be multi-dimensional vectors, and the dimensions of the vectors may be in one-to-one correspondence to the types of parameters. For example, each of the parameter of the on-board electrical device, the driving mode parameter, the energy recovery parameter, the vehicle load parameter, and the tire pressure parameter may be regarded as one dimensional feature vector, and the feature vectors of the dimensions are integrated to obtain the first feature vector and the second feature vector. Among them, integration of the feature vectors of the dimensions may be performed by sequentially filling the feature values of the vehicle parameters to the corresponding dimensions according to a defined dimensional order.

For example, the first vehicle parameters are: the parameter of the on-board electrical device being 0.5, the driving mode parameter being 2, the energy recovery parameter being 0.8, the vehicle load parameter being 1500 kilograms (kg), and the tire pressure parameter being 2.5 bars. The first feature vector may be represented as [0.5, 2, 0.8, 1500, 2.5]. It should be noted that the process of obtaining the second feature vector is similar to that of obtaining the first feature vector, and will not be repeated here. In addition, the first and second feature vectors are illustrative examples and may be determined based on the first and second vehicle parameters in practice.

Then, at least one of the cosine similarity, Euclidean distance, or Manhattan distance between the first feature vector and the second feature vector may be calculated to determine the third similarity between the first feature vector and the second feature vector.

Using an example where the cosine similarity between the first and second feature vectors are calculated, the cosine similarity cosθ between the first feature vector A and the second feature vector B may be calculated using formula (1): $cosθ = \frac{A ⋅ B}{\left‖A\right‖ \times \left‖B\right‖}$ (1).

In the aforementioned formula (1), ∥*A*∥ and ∥*B*∥ represent the norms of vectors A and B, respectively. The value range of the cosine similarity is between -1 and 1. The closer the value is to 1, the more similar the first feature vector and the second feature vector are; the closer the value is to -1, the less similar the first feature vector and the second feature vector are. By calculating the similarity between the first feature vector and the second feature vector, the third similarity between the first vehicle parameter and the second vehicle parameter may be obtained.

The third similarity is compared with the second similarity threshold. If the third similarity is greater than or equal to the second similarity threshold, the corresponding second vehicle parameter is determined as the reference vehicle parameter, and the historical trip data corresponding to the reference vehicle parameter is determined as the selected historical trip data. The second similarity threshold may be set based on the actual situation of the vehicle, and the present disclosure does not impose any limitations on this.

It should be noted that the method for calculating the third similarity between the first vehicle parameter and the second vehicle parameter in the present disclosure is illustrative. Other methods for calculating the third similarity are also available, and the present disclosure does not impose any restrictions on this.

In the technical solutions according to the embodiments of the present disclosure, the selected historical trip data is determined based on the third similarity between the first vehicle parameter and the second vehicle parameter. The selected historical trip data is similar to the current vehicle trip data. In the subsequent process, when the selected historical trip data is used to determine the available range of the vehicle, the accuracy of the available range of the vehicle can be improved.

In step 203, a weight corresponding to the selected historical trip data is determined based on the reference similarity, and a second historical available range corresponding to the second battery SOC is determined based on the weight and a first historical available range in the selected historical trip data.

In the exemplary embodiments of the present disclosure, the reference similarity may further include a first similarity, and the process of determining the second historical available range corresponding to the second battery SOC may include steps 2031 to 2035 (not shown in the figure).

In step 2031, the second battery SOC in the selected historical trip data is divided into a plurality of SOC intervals, and the first similarity between the second vehicle parameter corresponding to any one of the plurality of SOC intervals and the first vehicle parameter is determined, wherein energy consumption of the vehicle in a same SOC interval remains unchanged.

Illustratively, in the selected historical trip data, the second battery SOC changes from SOCₙ to 0%, and the second battery SOC from 0% to SOCₙ is divided into a plurality of SOC intervals. The dividing process for obtaining the SOC intervals may be performed based on the battery energy consumption of the vehicle. In any SOC interval, the battery energy consumption of the vehicle remains unchanged or changes slightly; in different SOC intervals, the battery energy consumption of the vehicle may be the same or different.

For example, the SOC interval may be [0%, SOC₁), [SOC₁, SOC₂), ... [SOCₙ₋₁, SOCₙ], the second vehicle parameter corresponding to each SOC interval is obtained, and the first similarity between the second vehicle parameter corresponding to each SOC interval and the first vehicle parameter is calculated. It should be noted that for different selected historical trip data, the obtained SOC intervals may be the same or different, and the division may be performed separately based on the second vehicle parameter corresponding to each selected historical trip data. In addition, the process of calculating the first similarity is similar to that of calculating the third similarity, and will not be elaborated here.

In step 2032, a SOC interval with the first similarity greater than or equal to a first similarity threshold is determined as a reference SOC interval.

Illustratively, the first similarity between the second vehicle parameter corresponding to each SOC interval and the first vehicle parameter is compared with the first similarity threshold, and the SOC interval with the first similarity greater than or equal to the first similarity threshold is obtained, and this SOC interval is determined as the reference SOC interval. It should be noted that the first similarity threshold may be set based on the historical trip data of the vehicle. In the entire historical trip data, the battery energy consumption of the vehicle may change. For example, turning on the on-board air conditioner, using the on-board audio, or the change in traffic conditions may all cause the change in battery energy consumption. The first similarity threshold may be set to be greater than the third similarity threshold, and the reference SOC interval that is more similar to the current vehicle state may be determined from the historical trip data. In subsequent processes, the accuracy of determining the available range of the vehicle based on the reference SOC interval can be improved.

In step 2033, a weight corresponding to the reference SOC interval is determined based on the first similarity.

In some embodiments of the present disclosure, after the first similarity corresponding to the reference SOC interval is determined, the weight corresponding to the reference SOC interval may be determined based on the number of reference SOC intervals and the first similarity. The greater the value of the first similarity corresponding to the reference SOC interval, the greater the corresponding weight. For example, the first similarity corresponding to the reference SOC interval may be directly normalized, and the normalized value may be used as the weight corresponding to the reference SOC interval.

In some embodiments of the present disclosure, after the first similarity corresponding to the reference SOC interval is determined, the weight corresponding to the reference SOC interval may be determined based on the third similarity, the number of reference SOC intervals, and the first similarity. For example, if there are x pieces of selected historical trip data, the corresponding first weights are A1, A2, ..., Ax (where the sum of A1, A2, ..., Ax is 1), there are y reference SOC intervals corresponding to the selected historical trip data with the first weight A1, and the corresponding second weights are B1, B2, ..., By (where the sum of B1, B2, ..., By is 1), for the reference SOC interval with the second weight B1, the average value of the first weight A1 and the second weight B1, or the product of the first weight A1 and the second weight B1, may be determined as the final weight corresponding to the reference SOC interval.

It should be noted that the process of determining the weight in the above embodiments is illustrative, and other methods may be used to determine the weight of the reference SOC interval, which is not limited by the present disclosure. In addition, the process of determining the first weight and the second weight may be similar to the process of determining the weight corresponding to the reference SOC interval in the above embodiments, which will not be redundantly described here.

In step 2034, a plurality of reference available ranges corresponding to second battery SOCs within the reference SOC interval are obtained.

In the exemplary embodiments of the present disclosure, the reference SOC interval may include a plurality of second battery SOCs. Among the selected historical trip data corresponding to the reference SOC interval, the reference available range corresponding to the second battery SOC in the reference SOC interval is obtained. For example, if the reference SOC interval is [30% to 35%], which includes five second battery SOCs, namely 30%, 31%, 32%, 33%, and 34%, the second battery SOC corresponding to the available range of the vehicle is used as the reference available range.

In step 2035, the second historical available range corresponding to the second battery SOC is determined based on the weight corresponding to the reference SOC interval and the plurality of reference available ranges.

Illustratively, for any second battery SOC, the weighted average value of the reference available range corresponding to the second battery SOC is calculated based on the weight of the reference SOC interval where the second battery SOC is located and the reference available range corresponding to the second battery SOC. The weighted average value is determined as the second historical available range corresponding to the second battery SOC. For example, if the second battery SOC is 30%, and there are m reference SOC intervals, the weighted average value of m reference available ranges is calculated based on the weight of the reference SOC interval where the second battery SOC at 30% is located and the reference available range of the second battery SOC at 30% to obtain the second historical available range corresponding to the second battery SOC at 30%.

Taking the example where there are three pieces of selected historical trip data corresponding to the reference SOC interval, with the battery SOC varying from 100% to 10%, and the reference SOC interval being 10%, Table 1 is a partial list of second vehicle parameters within the reference SOC interval.

**Table 1**

| SOC interval | [10%, 20%) | [20%, 20% ) | [30%, 40% ) | [40%, 50% ) | [50%, 60% ) |
|---|---|---|---|---|---|
| Travel 1 | S11 | S12 | S13 | S14 | S15 |
| Weight 1 | A1 | A2 | A3 | A4 | A5 |
| Travel 2 | S21 | S22 | S23 | S24 | S25 |
| Weight 2 | B1 | B2 | B3 | B4 | B5 |
| Travel 3 | S31 | S32 | S33 | S34 | S35 |
| Weight 3 | C1 | C2 | C3 | C4 | C5 |

| SOC interval | [60%, 70%) | [70%, 80% ) | [80%, 90% ) | [90%, 100% ) | |
|---|---|---|---|---|---|
| Travel 1 | S16 | S17 | S18 | S19 | |
| Weight 1 | A6 | A7 | A8 | A9 | |
| Travel 2 | S26 | S27 | S28 | S29 | |
| Weight 2 | B6 | B7 | B8 | B9 | |
| Travel 3 | S36 | S37 | S38 | S39 | |
| Weight 3 | C6 | C7 | C8 | C9 | |

Referring to Table 1, the selected historical trip data corresponding to the reference SOC interval are travel 1, travel 2, and travel 3. Each trip data may be divided into 9 SOC intervals, each SOC interval may correspond to a weight, and each SOC interval may include a plurality of second battery SOCs and the reference available ranges corresponding to the second battery SOCs. Continuing with the example where the second battery SOC is 30%, S13, S23, and S33 represent the first historical available ranges corresponding to the second battery SOC at 30%. Then, the second historical available range S corresponding to the second battery SOC state at 30% is calculated by: S = (A3*S13 + B3*S23 + C3*S33) / (A3 + B3 + C3).

In the technical solutions according to the exemplary embodiments of the present disclosure, the calculation error of the available range of the vehicle reduces due to the change in vehicle energy consumption during the entire traveling process by dividing the second battery SOC corresponding to the selected historical trip data into a plurality of SOC intervals and determining the first similarity between the second vehicle parameter corresponding to the SOC interval and the first vehicle parameter. Furthermore, by calculating the second historical available range based on the weight corresponding to the reference SOC interval where the second battery SOC is located and the reference available range, a more accurate second historical available range can be obtained, which is beneficial for improving the accuracy of determining the current available range of the vehicle based on the second historical available range in subsequent processes.

In step 204, a correction parameter corresponding to the second historical available range is determined, and a target available range of the vehicle corresponding to the first battery SOC is determined based on the correction parameter, the second historical available range, and the current available range of the vehicle.

In the exemplary embodiments of the present disclosure, the real-time vehicle information may further include first environmental information, and the historical trip data may further include second environmental information. The first environmental information may be information about the environment in which the vehicle is located at the current moment, and the second environmental information may be information about the environment in which the vehicle was located at the historical moment. The relevant contents of the first environmental information and the second environmental information are described in detail in step 201, which are not described herein any further.

The process of determining the correction parameter corresponding to the second historical available range may include: determining the second similarity between the second environmental information corresponding to the reference SOC interval and the first environmental information; determining the first correction factor corresponding to the reference available range based on the second similarity, and determining the second correction factor corresponding to the reference available range based on the first similarity; and determining the correction parameter corresponding to the second historical available range based on the first and second correction factors.

Illustratively, different environments in which the vehicle is traveling may affect the available range of the vehicle. For instance, in low-temperature environments, battery activity decreases, and so does the discharge capacity, thereby reducing energy conversion efficiency and leading to a decrease in available range. In high-temperature environments, battery activity increases, and so does the discharge capacity, resulting in an increase in energy conversion efficiency and a relative increase in available range. Another example is that when the vehicle is in an urban environment, the vehicle is started and stopped frequently, which increases power consumption and affects the available range. When the vehicle is in a highway environment, traveling with or against the wind may affect the resistance acting on the vehicle. When traveling against the wind, the vehicle needs to consume more power to overcome the resistance. Therefore, it is necessary to determine the second similarity between the second environmental information corresponding to the reference SOC interval and the first environmental information. The second similarity may indicate the similarity between the current traveling environment and the historical traveling environment of the vehicle.

It should be noted that the process of determining the second similarity may be similar to the process of determining the third similarity, and thus reference may be made to the relevant description of determining the third similarity in the above embodiments, which is not described herein any further.

Upon determination of the second similarity, the first correction factor may also be determined based on the second similarity. Depending on the magnitude of the second similarity, the first correction factor may be determined based on a lookup table or a correction function. The first correction factor may represent the impact of the difference between the current traveling environment and the historical traveling environment on the available range. Since the second vehicle parameters corresponding to the reference SOC interval are not completely identical to the parameters corresponding to the current vehicle traveling state during traveling of the vehicle , the second correction factor may be determined based on the first similarity between the second vehicle parameter corresponding to the SOC interval and the first vehicle parameter. The process of determining the second correction factor may be similar to that of determining the first correction factor, which is not described herein any further. Then, the first and second correction factors are combined, which can include but is not limited to adding, multiplying, and taking a weighted average of the first and second correction factors to obtain the correction parameter.

It should be noted that the processes of determining the first correction factor, the second correction factor, and the correction parameter in the present disclosure are illustrative, and other methods for calculating the correction factors and parameters may also be available, which are not limited by the present disclosure.

In the technical solutions according to the exemplary embodiments of the present disclosure, the first correction factor is determined based on the difference between the first environmental information of the traveling environment of the vehicle at the current moment and the second environmental information of the traveling environment of the vehicle at the historical moment, and the second correction factor is determined based on the difference between the vehicle parameter at the current moment and the vehicle parameter at the historical moment. Based on the first and second correction factors, the correction parameter corresponding to the second historical available range is determined, which helps reduce the error in available range caused by the differences in environmental information and vehicle parameters.

After the correction parameter is determined, the target available range of the vehicle may also be determined based on the correction parameter. The process of determining the target available range of the vehicle may include: determining a target battery SOC from the reference SOC interval; and in a case where the first battery SOC is the same as the target battery SOC, correcting the second historical available range based on the correction parameter, and determining the target available range of the vehicle based on a corrected second historical available range and a current available range.

In the exemplary embodiments of the present disclosure, the reference SOC interval may include a plurality of continuously changing second battery SOCs, and the target battery SOC is determined from the continuously changing second battery SOCs. The target battery SOC may be any one of the second battery SOCs, and may be determined based on actual requirements (such as traveling distance, charging convenience, and battery capacity). For example, when the battery is sufficiently charged, a smaller number of target battery SOCs may be selected from the reference SOC interval; and when the battery is insufficiently charged, a larger number of target battery SOCs may be selected from the reference SOC interval.

For example, when the reference SOC interval is [80%, 90%), one target SOC may be selected, and the target SOC may be 85%; when the reference SOC interval is [20%, 30%), five target SOCs may be selected, and the target SOCs are 20%, 22%, 24%, 26%, and 28% respectively.

During the current vehicle traveling, the first battery SOC corresponding to the vehicle battery decreases accordingly. When the first battery SOC is identical to the target battery SOC, whether the current available range of the vehicle meets the correction condition is determined. When the current available range of the vehicle meets the correction condition, the corrected second available range is determined as the target available range of the vehicle corresponding to the first battery SOC, that is, the corrected available range of the vehicle.

Illustratively, the current available range of the vehicle is compared with the corrected second available range corresponding to the first battery SOC. In the case where the difference between the current real-time available range of the vehicle and the corrected second available range is less than the available range threshold, the available range of the vehicle may not be corrected temporarily. In the case where the difference between the current available range of the vehicle and the corrected second available range is greater than or equal to the available range threshold, the current available range of the vehicle is corrected step by step during the process of the vehicle based on the correction parameter until the difference between the current available range of the vehicle and the corrected second available range is less than the available range threshold, such that the target available range of the vehicle corresponding to the first battery SOC is obtained. The available range threshold may be set based on the actual situation of the vehicle, and is not limited in the present disclosure.

Correcting the real-time available range of the vehicle step by step refers to determining the available range correction value corresponding to the SOC at each SOC sampling point within a plurality of continuous SOC sampling points based on the difference between the current real-time available range of the vehicle and the corrected second available range. The real-time available range of the vehicle corresponding to the SOC at the sampling point is corrected using the available range correction value corresponding to the SOC at the sampling point, thereby obtaining the corrected available range of the vehicle corresponding to each SOC sampling point. Through step-by-step correction at the plurality of continuous SOC sampling points, the real-time available range gradually approaches the corrected second available range, thus obtaining the target available range of the vehicle. Optionally, the available range correction value corresponding to the SOC at each SOC sampling point is the ratio of the difference between the current real-time available range of the vehicle and the corrected second available range to the number of sampling points.

For example, assuming the vehicle is currently at 30% SOC, the real-time available range is 120 km, and the corrected second available range is 130 km, with a difference of 0 km. Taking each 2% decrease in SOC as a sampling point, the sampling points are 30% SOC→28% SOC→ 26% SOC→24% SOC. Therefore, the available range corrected value corresponding to the SOC at each sampling point is 2.5 km. At 30% SOC, the real-time available range is corrected from 120 km to 122.5 km, and so on until the difference between the available range of the vehicle and the corrected second available range is less than the available range threshold, thus obtaining the target available range of the vehicle at different SOCs. By correcting proportionally in stages, a smooth transition from initial deviation to precise matching of the available range is achieved, avoiding data jumps.

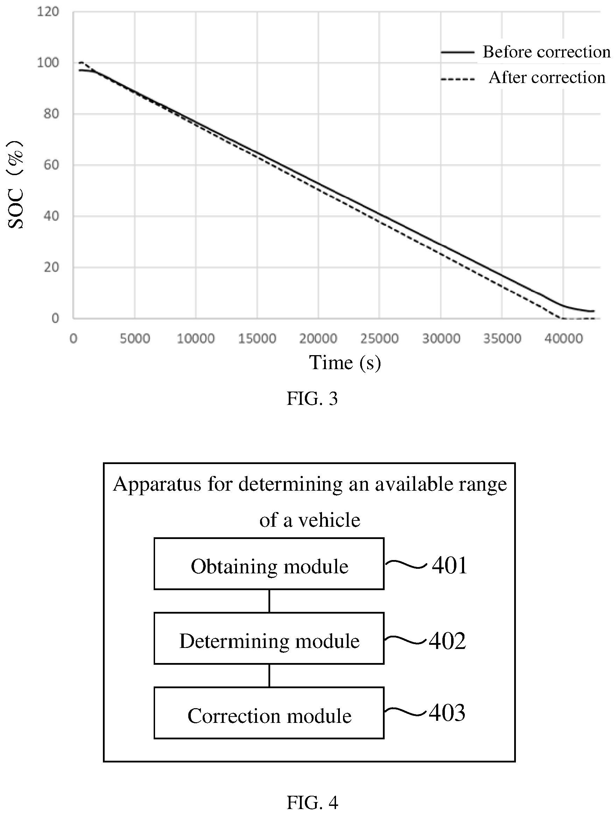

FIG. 3 is a schematic diagram of a vehicle available range curve according to some embodiments of the present disclosure. As shown in FIG. 3, the horizontal axis represents the travel time (seconds), and the vertical axis represents the battery SOC. The vehicle available range curve may include both the vehicle available range curve before correction and the vehicle available range curve after correction. It can be seen from FIG. 3 that there is a certain difference between the vehicle available range curve after correction and the vehicle available range curve before correction, and as time increases, the difference between the two curves increases.

In the technical solutions according to the exemplary embodiments of the present disclosure, the target battery SOC is determined from the reference SOC interval. When the first battery SOC is identical to the target battery SOC, the available range of the vehicle is corrected. This ensures timely correction of the available range of the vehicle when there is a small deviation, facilitates a smooth transition during the correction process, and prevents sudden changes in the available range of the vehicle after correction, thereby enhancing the driving experience.

In the technical solutions according to the exemplary embodiments of the present disclosure, the selected historical trip data is determined based on the reference similarity between the first vehicle parameter in the real-time vehicle information and the second vehicle parameter in the historical trip data and the historical duration. The selected historical trip data is similar to the first vehicle parameter of the current vehicle, which can improve the accuracy of determining the available range of the vehicle based on the selected historical trip data in subsequent processes. Furthermore, processing the selected historical trip data in subsequent processes can enhance data processing efficiency compared to processing all historical trip data. The weight corresponding to the selected historical trip data is determined based on the reference similarity, the second historical available range is determined based on the weight and the first historical available range, the second historical available range is corrected based on the correction parameter, and the vehicle target available range is determined based on the corrected second historical available range and the current available range of the vehicle, such that the accuracy of the determined target available range of the vehicle can be improved.

The present disclosure also provides an apparatus for determining an available range of a vehicle. FIG. 4 is a schematic diagram of an apparatus for determining an available range of a vehicle according to some embodiments of the present disclosure. As shown in FIG. 4, the apparatus includes the following modules.

The obtaining module 401 is configured to obtain real-time vehicle information and historical trip data of the vehicle, wherein the real-time vehicle information includes a first vehicle parameter corresponding to a traveling state of the vehicle at a current moment, the first vehicle parameter including a first battery SOC and a current available range of the vehicle corresponding to the first battery SOC, and the historical trip data includes a second vehicle parameter corresponding to a traveling state of the vehicle at a historical moment, the second vehicle parameter including a second battery SOC and a first historical available range corresponding to the second battery SOC.

The determining module 402 is configured to determine selected historical trip data from the historical trip data based on a reference similarity between the first vehicle parameter and the second vehicle parameter, wherein a historical duration of the selected historical trip data is less than or equal to a threshold duration, and the historical duration is from the historical moment to the current moment.

The determining module 402 is also configured to determine a weight corresponding to the selected historical trip data based on the reference similarity, and determine a second historical available range corresponding to the second battery SOC based on the weight and a first historical available range in the selected historical trip data.

The correction module 403 is configured to determine a correction parameter corresponding to the second historical available range, and determine a target available range of the vehicle corresponding to the first battery SOC based on the correction parameter, the second historical available range, and the current available range of the vehicle.

In some embodiments, the reference similarity includes a first similarity, and the determining module 402 is further configured to divide the second battery SOC in the selected historical trip data into a plurality of SOC intervals, and determining the first similarity between the second vehicle parameter corresponding to any one of the plurality of SOC intervals and the first vehicle parameter, wherein energy consumption of the vehicle in a same SOC interval remains unchanged.

The determining module 402 is configured to determine a SOC interval with the first similarity greater than or equal to a first similarity threshold as a reference SOC interval; determine a weight corresponding to the reference SOC interval based on the first similarity; obtain a plurality of reference available ranges corresponding to second battery SOCs within the reference SOC interval; and determine the second historical available range corresponding to the second battery SOC based on the weight corresponding to the reference SOC interval and the plurality of reference available ranges.

In some embodiments, the real-time vehicle information also includes first environmental information, and the historical trip data also includes second environmental information. The correction module 403 is configured to determine the second similarity between the second environmental information corresponding to the reference SOC interval and the first environmental information; determine a first correction factor corresponding to each of the plurality of reference available ranges based on the second similarity, and determine a second correction factor corresponding to each of the plurality of reference available ranges based on the first similarity; and determine the correction parameter corresponding to the second historical available range based on the first correction factor and the second correction factor.

In some embodiments, the correction module 403 is configured to determine a target battery SOC from the reference SOC interval; and in a case where the first battery SOC is the same as the target battery SOC, correct the second historical available range based on the correction parameter, and determine the target available range of the vehicle based on a corrected second historical available range and a current available range.

In some embodiments, the reference similarity includes a third similarity, the determining module 402 is configured to determine the third similarity between the first vehicle parameter and the second vehicle parameter, and determine a second vehicle parameter with the third similarity greater than or equal to a second similarity threshold as a reference vehicle parameter; and determine the historical trip data corresponding to the reference vehicle parameters as the selected historical trip data.

In some embodiments, the determining module 402 is further configured to determine the historical moment when the historical trip data is generated, and obtaining historical trip data with a historical duration less than or equal to the threshold duration by performing a first screening on the historical trip data based on the historical duration from the historical moment to the current moment; and the determining module 402 is configured to determine the third similarity between the first vehicle parameter and the second vehicle parameter in historical trip data with the historical duration less than or equal to the threshold duration.

In some embodiments, the threshold duration is determined based on at least one of a preset duration, a change in a battery performance of the vehicle, or a usage environment of the vehicle, wherein the change in the battery performance of the vehicle includes at least one of a number of battery charge and discharge cycles or a battery state of health.

In some embodiments, the correction module 403 is configured to: in a case where a difference between the current available range of the vehicle and a corrected second available range is greater than or equal to an available range threshold, correct the current available range of the vehicle step by step based on the correction parameter during a traveling process of the vehicle until the difference between the current available range of the vehicle and the corrected second available range is less than the available range threshold, such that the target available range of the vehicle corresponding to the first battery SOC is obtained.

In some embodiments, the first vehicle parameter further includes at least one of a parameter of an on-board electrical device corresponding to the current moment, a driving mode parameter, an energy recovery parameter, a vehicle load parameter, or a tire pressure parameter; and the second vehicle parameter further includes at least one of a parameter of an on-board electrical device corresponding to the historical moment, a driving mode parameter, an energy recovery parameter, a vehicle load parameter, or a tire pressure parameter.

In the technical solutions according to the exemplary embodiments of the present disclosure, the selected historical trip data is determined based on the reference similarity between the first vehicle parameter in the real-time vehicle information and the second vehicle parameter in the historical trip data and the historical duration. The selected historical trip data is similar to the first vehicle parameter of the current vehicle, which can improve the accuracy of determining the available range of the vehicle based on the selected historical trip data in subsequent processes. Furthermore, processing the selected historical trip data in subsequent processes can enhance data processing efficiency compared to processing all historical trip data. The weight corresponding to the selected historical trip data is determined based on the reference similarity, the second historical available range is determined based on the weight and the first historical available range, the second historical available range is corrected based on the correction parameter, and the vehicle target available range is determined based on the corrected second historical available range and the current available range of the vehicle, such that the accuracy of the determined target available range of the vehicle can be improved.

It should be understood that the above apparatus is exemplified only by the division of various functional modules when achieving its functions. In practical applications, the above functions may be allocated to different functional modules as needed, that is, the internal structure of the apparatus may be divided into different functional modules to complete all or part of the functions described above. Additionally, the apparatus in the above embodiments and the method embodiments belong to the same concept, and the specific implementation process is detailed in the method embodiments, which will not be repeated here.

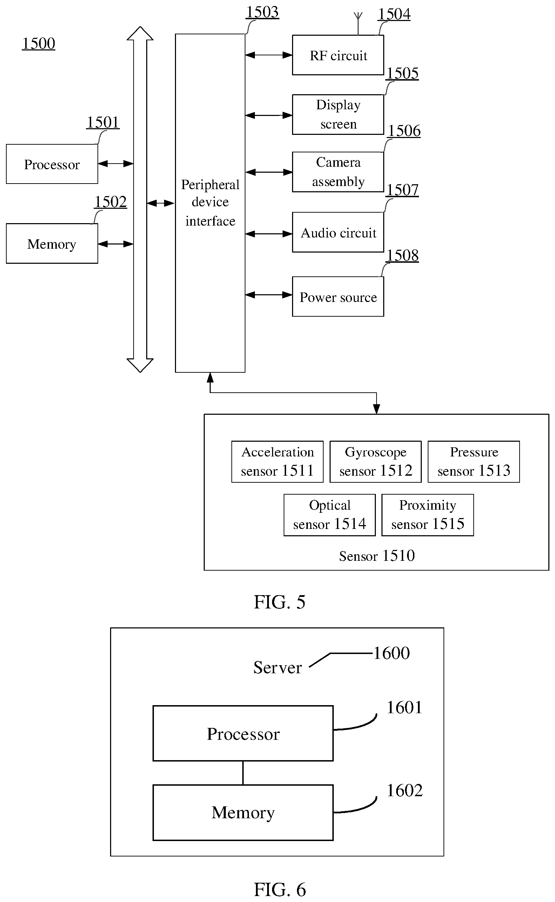

FIG. 5 is a structural block diagram of a terminal device according to some embodiments of the present disclosure. The terminal device 1500 may be any electronic device product that enables human-computer interaction with a user through one or more of a keyboard, touchpad, remote control, voice interaction, or handwriting device. For example, the terminal device 1500 is a personal computer (PC), mobile phone, smartphone, personal digital assistant (PDA), wearable device, pocket PC (PPC), tablet computer, intelligent car machine, and the like.

Generally, the terminal device 1500 includes: a processor 1501 and a memory 1502.

The processor 1501 may include one or more processing cores, such as a 4-core processor, an 8-core processor, and the like. The processor 1501 may be implemented using at least one hardware of a digital signal processor (DSP), a field-programmable gate array (FPGA), or a programmable logic array (PLA). The processor 1501 may also include a main processor and a co-processor. The main processor is a processor used to process data in the awake state, also known as a central processing unit (CPU). The co-processor is a low-power processor used to process data in the standby state. In some embodiments, the processor 1501 may be integrated with a graphics processing unit (GPU), which is used to render and draw the content required to be displayed on the display screen. In some embodiments, the processor 1501 may also include an artificial intelligence (AI) processor, which is used to handle computational operations related to machine learning.

The memory 1502 may include one or more computer-readable storage medium, which may be non-transitory. The memory 1502 may also include high-speed random access memory, and non-volatile memory, such as one or more disk storage devices or flash memory storage devices. In some embodiments, the non-transitory computer-readable storage medium in the memory 1502 are used to store at least one instruction, which when executed by the processor 1501, causes the processor to perform the method for determining the available range of the vehicle according to the method embodiments of the present disclosure.

In some embodiments, the terminal device 1500 may also include: a peripheral device interface 1503 and at least one peripheral device. The processor 1501, memory 1502, and peripheral device interface 1503 may be connected via a bus or signal line. Each peripheral device may be connected to the peripheral device interface 1503 via a bus, signal line, or circuit board. Specifically, the peripheral device includes at least one of the following: a radio frequency (RF) circuit 1504, a display screen 1505, a camera assembly 1506, an audio circuit 1507, or a power supply 1508.

The peripheral device interface 1503 may be used to connect at least one input/output (I/O) related peripheral device to the processor 1501 and the memory 1502. In some embodiments, the processor 1501, the memory 1502, and the peripheral device interface 1503 are integrated onto the same chip or circuit board; in some other embodiments, any one or two of the processor 1501, the memory 1502, and the peripheral device interface 1503 may be implemented on separate chips or circuit boards. This embodiment does not impose any limitations on this.

The RF circuit 1504 is used to receive and transmit RF signals, also known as electromagnetic signals. The RF circuit 1504 communicates with communication networks and other communication devices through the electromagnetic signals. The RF circuit 1504 converts electrical signals into electromagnetic signals for signal transmission, or converts received electromagnetic signals into electrical signals. Optionally, the RF circuit 1504 includes: an antenna system, an RF transceiver, one or more amplifiers, a tuner, an oscillator, a digital signal processor, a codec chipset, a user identity module card, and on the like. The RF circuit 1504 may communicate with other terminal devices through at least one wireless communication protocol. The wireless communication protocol includes but is not limited to: the World Wide Web, metropolitan area networks, intranets, various generations of mobile communication networks (2G, 3G, 4G, and 5G), wireless local area networks, and/or wireless fidelity (Wi-Fi) networks. In some embodiments, the RF circuit 1504 may also include circuits related to near-field communication (NFC), which is not limited in the present disclosure.

The display screen 1505 is used to display the user interface (UI). The UI may include graphics, text, icons, videos, and any combination thereof. When the display screen 1105 is a touch display screen, the display screen 1505 also has the ability to capture touch signals on or above the surface of the display screen 1505. The touch signals may be input as control signals to the processor 1501 for processing. In this case, the display screen 1505 may also be used to provide virtual buttons and/or virtual keyboards, also known as soft buttons and/or soft keyboards. In some embodiments, one display screen 1505 may be disposed on the front panel of the terminal device 1500; in other embodiments, at least two the display screens 1505 may be disposed on different surfaces of the terminal device 1500 or in a folding design; in yet other embodiments, the display screen 1505 may be a flexible display screen, disposed on the curved surface or folding surface of the terminal device 1500. Furthermore, the display screen 1505 may also be disposed in a non-rectangular irregular shape, also known as an irregular-shaped screen. The display screen 1505 may be made of materials such as liquid crystal display (LCD) or organic light-emitting diode (OLED).

The camera assembly 1506 is used to capture images or videos. Optionally, the camera assembly 1506 includes a front camera and a rear camera. Typically, the front camera is disposed on the front panel of the terminal device 1500, and the rear camera is disposed on the back of the terminal device 1500. In some embodiments, at least two types of rear cameras are disposed, namely a main camera, a depth-of-field camera, a wide-angle camera, and a telephoto camera, respectively, to achieve the background blurring function by integrating the main camera and the depth-of-field camera, the panoramic shooting function, the virtual reality (VR) shooting function, or other integrated shooting functions by integrating the main camera and the wide-angle camera. In some embodiments, the camera assembly 1506 may further include a flashlight. The flashlight may be a single color temperature flashlight or a dual color temperature flashlight. The dual color temperature flashlight refers to a combination of a warm light flashlight and a cold light flashlight, which may be used for light compensation under different color temperatures.

The audio circuit 1507 may include a microphone and a speaker. The microphone is used to capture sound waves from the user and the environment, and convert the sound waves into electrical signals that are input to the processor 1501 for processing, or input to the RF circuit 1504 to enable voice communication. For the purpose of stereo capture or noise reduction, there may be a plurality of microphones, each located at different parts of the terminal device 1500. The microphones may also be array microphones or omnidirectional capture microphones. The speaker is used to convert electrical signals from the processor 1501 or the RF circuit 1504 into sound waves. The speaker may be a traditional thin-film speaker or a piezoelectric ceramic speaker. When the speaker is a piezoelectric ceramic speaker, the speaker may not only convert electrical signals into sound waves that are audible to humans, but also convert electrical signals into sound waves that are inaudible to humans for purposes such as ranging. In some embodiments, the audio circuit 1507 may also include an earphone jack.

The power supply 1508 is used to supply power to various assemblies in the terminal device 1500. The power supply 1508 may be an alternating current (AC) power supply, a direct current (DC) power supply, a disposable battery, or a rechargeable battery. When the power supply 1508 includes a rechargeable battery, the rechargeable battery may be a wired charging battery or a wireless charging battery. The wired charging battery is a battery that is charged through wired lines, and the wireless charging battery is a battery that is charged through wireless coils. The rechargeable battery may also be used to support fast charging technology.

In some embodiments, the terminal device 1500 further includes one or more sensors 1510. The one or more sensors 1510 include, but are not limited to: an acceleration sensor 1511, a gyroscope sensor 1512, a pressure sensor 1513, an optical sensor 1514, and a proximity sensor 1515.

The acceleration sensor 1511 may detect the magnitude of acceleration on the three coordinate axes of the coordinate system established by the terminal device 1500. For example, the acceleration sensor 1511 may be used to detect the components of gravitational acceleration on the three coordinate axes. The processor 1501 may control, based on the gravitational acceleration signal captured by the acceleration sensor 1511, the display screen 1505 to display the user interface in landscape or portrait view. The acceleration sensor 1511 may also be used for game play or the capture of user's motion data.

The gyroscope sensor 1512 may detect the body orientation and rotation angle of the terminal device 1500. The gyroscope sensor 1512 may collaborate with the acceleration sensor 1511 to capture the user's 3D actions on the terminal device 1500. Based on the data captured by the gyroscope sensor 1512, the processor 1501 may implement the following functions: motion sensing (such as changing the UI based on the user's tilt operation), image stabilization during shooting, game control, and inertial navigation.

The pressure sensor 1513 may be disposed on the side frame of the terminal device 1500 and/or on the lower layer of the display screen 1505. When the pressure sensor 1513 is disposed on the side frame of the terminal device 1500, the pressure sensor 1513 may detect the user's grip signal on the terminal device 1500, and the processor 1501 may perform left and right hand recognition or shortcut operations based on the grip signal captured by the pressure sensor 1513. When the pressure sensor 1513 is disposed on the lower layer of the display screen 1505, the processor 1501 may control the operable controls on the UI interface based on the user's pressure operation on the display screen 1505. The operable controls include at least one of button controls, scroll bar controls, icon controls, or menu controls.

The optical sensor 1514 is used to capture the ambient light intensity. In some embodiments, the processor 1501 may control the display brightness of the display screen 1505 based on the ambient light intensity captured by the optical sensor 1514. Specifically, when the ambient light intensity is high, the display brightness of the display screen 1505 is increased; and when the ambient light intensity is low, the display brightness of the display screen 1505 is decreased. In another embodiments, the processor 1501 may also dynamically adjust the shooting parameters of the camera assembly 1506 based on the ambient light intensity captured by the optical sensor 1514.

The proximity sensor 1515, also known as a distance sensor, is typically disposed on the front panel of the terminal device 1500. The proximity sensor 1515 is used to capture the distance between the user and the front of the terminal device 1500. In some embodiments, when the proximity sensor 1515 detects a gradually decreasing distance between the user and the front of the terminal device 1500, the processor 1501 controls the display screen 1505 to switch from a lit state to a screen-off state; when the proximity sensor 1515 detects a gradually increasing distance between the user and the front of the terminal device 1500, the processor 1501 controls the display screen 1505 to switch from a screen-off state to a lit state.

Those skilled in the art can understand that the structure shown in FIG. 5 does not constitute a limitation on the terminal device 1500, and may include more or fewer assemblies than shown, or combine certain assemblies, or adopt different assembly arrangements.

FIG. 6 is a schematic structural diagram of a server according to some embodiments of the present disclosure. The server 1600 may vary significantly due to different configurations or performances, and may include one or more processors 1601 and one or more memories 1602. At least one program code is stored in the one or more memories 1602, and the at least one program code, when loaded and executed by the one or more processors 1601, causes the one or more processors 1601 to perform the method for determining the available range of the vehicle according to the various method embodiments described above. The server 1600 may also have assemblies such as wired or wireless network interfaces, keyboards, and input/output interfaces for input and output. The server 1600 may also include other assemblies for implementing device functions, which will not be described in detail here.

In exemplary embodiments, a computer-readable storage medium is also provided. At least one program code is stored in the computer-readable storage medium. The at least one program code, when loaded and executed by a processor, causes a computer to perform any of the above-mentioned methods for determining the available range of the vehicle.

Alternatively, the aforementioned computer-readable storage medium may be a read-only memory (ROM), random access memory (RAM), compact disc read-only memory (CD-ROM), magnetic tape, floppy disk, optical data storage device, and the like.

In exemplary embodiments, a computer program or computer program product is also provided. At least one computer instruction is stored in the computer program or computer program product. The at least one computer instruction, when loaded and executed by a processor, causes a computer to perform any of the above-mentioned methods for determining the available range of the vehicle.

It should be noted that the information (including but not limited to user equipment information, user personal information, and the like), data (including but not limited to data for analysis, stored data, displayed data, and the like), and signals involved in the present disclosure are all authorized by the users or fully authorized by the parties. The collection, use, and processing of relevant data shall comply with the relevant laws, regulations, and standards of the relevant countries and regions. For example, the real-time vehicle information, historical trip data, first vehicle parameters, and second vehicle parameters involved in the present disclosure are all obtained with full authorization.

It should be understood that the term "a plurality of" in the present disclosure refers to two or more. The term "And/or" describes the association relationship between associated objects, indicating that there may be three types of relationships. For example, A and/or B may represent three situations: A exists alone, A and B exist simultaneously, and B exists alone. The character "/" generally indicates that the relationship between the preceding and following associated objects is an "or" relationship.

Described above are merely exemplary embodiments of the present disclosure and are not intended to limit the present disclosure. Any modifications, equivalent substitutions, improvements, or the like, made within the principles of the present disclosure should fall within the protection scope of the present disclosure.

## Claims

1. A method for determining an available range of a vehicle, applicable to a vehicle control system, the method comprising:
obtaining real-time vehicle information and historical trip data of the vehicle, wherein the real-time vehicle information comprises a first vehicle parameter corresponding to a traveling state of the vehicle at a current moment, the first vehicle parameter comprising a first battery state of charge (SOC) and a current available range of the vehicle corresponding to the first battery SOC, and the historical trip data comprises a second vehicle parameter corresponding to a traveling state of the vehicle at a historical moment, the second vehicle parameter comprising a second battery SOC and a first historical available range corresponding to the second battery SOC;
determining selected historical trip data from the historical trip data based on a reference similarity between the first vehicle parameter and the second vehicle parameter, wherein a historical duration of the selected historical trip data is less than or equal to a threshold duration, and the historical duration is from the historical moment to the current moment;
determining a weight corresponding to the selected historical trip data based on the reference similarity, and determining a second historical available range corresponding to the second battery SOC based on the weight and a first historical available range in the selected historical trip data; and
determining a correction parameter corresponding to the second historical available range, and determining a target available range of the vehicle corresponding to the first battery SOC based on the correction parameter, the second historical available range, and the current available range of the vehicle.

2. The method according to claim 1, wherein
the reference similarity comprises a first similarity; and
prior to determining the weight corresponding to the selected historical trip data based on the reference similarity, and determining the second historical available range corresponding to the second battery SOC based on the weight and the first historical available range in the selected historical trip data, the method further comprises:
dividing the second battery SOC in the selected historical trip data into a plurality of SOC intervals, and determining the first similarity between the second vehicle parameter corresponding to any one of the plurality of SOC intervals and the first vehicle parameter, wherein energy consumption of the vehicle in a same SOC interval remains unchanged; and
determining the weight corresponding to the selected historical trip data based on the reference similarity, and determining the second historical available range corresponding to the second battery SOC based on the weight and the first historical available range in the selected historical trip data comprise:
determining an SOC interval with the first similarity greater than or equal to a first similarity threshold as a reference SOC interval;
determining a weight corresponding to the reference SOC interval based on the first similarity;
obtaining a plurality of reference available ranges corresponding to second battery SOC within the reference SOC interval; and
determining the second historical available range corresponding to the second battery SOC based on the weight corresponding to the reference SOC interval and the plurality of reference available ranges.

3. The method according to claim 2, wherein
the real-time vehicle information further comprises first environmental information, and the historical trip data further comprises second environmental information; and
determining the correction parameter corresponding to the second historical available range comprises:
determining the second similarity between the second environmental information corresponding to the reference SOC interval and the first environmental information;
determining a first correction factor corresponding to each of the plurality of reference available ranges based on the second similarity, and determining a second correction factor corresponding to each of the plurality of reference available ranges based on the first similarity; and
determining the correction parameter corresponding to the second historical available range based on the first correction factor and the second correction factor.

4. The method according to claim 2, wherein determining the target available range of the vehicle corresponding to the first battery SOC based on the correction parameter, the second historical available range, and the current available range of the vehicle comprises:
determining a target battery SOC from the reference SOC interval; and
in a case where the first battery SOC is the same as the target battery SOC, correcting the second historical available range based on the correction parameter, and determining the target available range of the vehicle based on a corrected second historical available range and the current available range.

5. The method according to any one of claims 1 to 4, wherein
the reference similarity comprises a third similarity; and
determining the selected historical trip data from the historical trip data based on the reference similarity between the first vehicle parameter and the second vehicle parameter comprises:
determining the third similarity between the first vehicle parameter and the second vehicle parameter, and determining a second vehicle parameter with the third similarity greater than or equal to a second similarity threshold as a reference vehicle parameter; and
determining the historical trip data corresponding to the reference vehicle parameters as the selected historical trip data.

6. The method according to claim 5, further comprising:
determining the historical moment when the historical trip data is generated, and obtaining historical trip data with a historical duration less than or equal to the threshold duration by performing a first screening on the historical trip data based on the historical duration from the historical moment to the current moment; and
determining the third similarity between the first vehicle parameter and the second vehicle parameter comprises:
in the historical trip data with the historical duration less than or equal to the threshold duration, determining the third similarity between the first vehicle parameter and the second vehicle parameter.

7. The method according to claim 6, wherein the threshold duration is determined based on at least one of a preset duration, a change in a battery performance of the vehicle, or a usage environment of the vehicle, wherein the change in the battery performance of the vehicle comprises at least one of a number of battery charge and discharge cycles or a battery state of health (SOH).

8. The method according to any one of claims 1 to 4, wherein determining the target available range of the vehicle corresponding to the first battery SOC based on the correction parameter, the second historical available range, and the current available range of the vehicle comprises:
in a case where a difference between the current available range of the vehicle and a corrected second available range is greater than or equal to an available range threshold, correcting the current available range of the vehicle step by step based on the correction parameter during a traveling process of the vehicle until the difference between the current available range of the vehicle and the corrected second available range is less than the available range threshold, such that the target available range of the vehicle corresponding to the first battery SOC is obtained.

9. The method according to any one of claims 1 to 4, wherein the first vehicle parameter further comprises at least one of a parameter of an on-board electrical device corresponding to the current moment, a driving mode parameter, an energy recovery parameter, a vehicle load parameter, or a tire pressure parameter; and the second vehicle parameter further comprises at least one of a parameter of an on-board electrical device corresponding to the historical moment, a driving mode parameter, an energy recovery parameter, a vehicle load parameter, or a tire pressure parameter.

10. An apparatus for determining an available range of a vehicle, comprising:
an obtaining module, configured to obtain real-time vehicle information and historical trip data of the vehicle, wherein the real-time vehicle information comprises a first vehicle parameter corresponding to a traveling state of the vehicle at a current moment, the first vehicle parameter comprising a first battery state of charge (SOC) and a current available range of the vehicle corresponding to the first battery SOC, and the historical trip data comprises a second vehicle parameter corresponding to a traveling state of the vehicle at a historical moment, the second vehicle parameter comprising a second battery SOC and a first historical available range corresponding to the second battery SOC;
a determining module, configured to determine selected historical trip data from the historical trip data based on a reference similarity between the first vehicle parameter and the second vehicle parameter, wherein a historical duration of the selected historical trip data is less than or equal to a threshold duration, and the historical duration is from the historical moment to the current moment;
wherein the determining module is further configured to determine a weight corresponding to the selected historical trip data based on the reference similarity, and determine a second historical available range corresponding to the second battery SOC based on the weight and a first historical available range in the selected historical trip data; and
a correction module, configured determine a correction parameter corresponding to the second historical available range, and determine a target available range of the vehicle corresponding to the first battery SOC based on the correction parameter, the second historical available range, and the current available range of the vehicle.

11. A computer device, comprising: a processor and a memory storing at least one program code therein, wherein the at least one program code, when loaded and executed by the processor, causes the computer device to perform the method for determining the available range of the vehicle according to any one of claims 1 to 9.

12. A computer-readable storage medium storing at least one program code therein, wherein the at least one program code, when loaded and executed by a processor, causes a computer to perform the method for determining the available range of the vehicle according to any one of claims 1 to 9.

13. A computer program product storing at least one computer instruction therein, wherein the at least one computer instruction, when loaded and executed by a processor, causes a computer to perform the method for determining the available range of the vehicle according to any one of claims 1 to 9.
